# EUROPEAN PATENT SPECIFICATION

(11) **EP 2 594 161 B1**
(45) Date of publication and mention of the grant of the patent: **15.06.2016**
(21) Application number: 11189918.3
(22) Date of filing: 21.11.2011
(51) Int. Cl.: A61G 7/018, H02K 7/116, A47C 20/04

(54) **An electric motor for a furniture device, a drive arrangement for a furniture device and a furniture device**
Elektromotor für eine Ausstattungsvorrichtung, Antriebsanordnung für eine Ausstattungsanordnung und Ausstattungsvorrichtung
Moteur électrique pour dispositif de mobilier, agencement de commande pour un dispositif de mobilier et dispositif de mobilier

(43) Date of publication of application: 22.05.2013
(73) Proprietor: You Bed AB, 131 30 Nacka (SE)
(72) Inventor: Viberg, Michael, 735 32 Surahammar (SE)
(74) Representative: Israelsson, Stefan

(56) References cited:
- CN-U- 201 674 340
- FR-A1- 2 694 171
- US-A- 5 829 077
- US-A- 6 000 077

## Description

### FIELD OF THE INVENTION

The present invention relates to an electric motor for a furniture device. The electric motor comprises a stator and a rotor adapted to be set into rotation in relation to the stator. The motor further comprises an elongated motor shaft comprising a first end part fixedly joined to the rotor so that the first end part and the rotor rotate with the same speed, and a cover enclosing the stator and the rotor. The cover comprises a first opening through which the first end part of the shaft extends in a first direction.

The present invention also relates to a drive arrangement for a furniture device comprising the electric motor. The present invention further relates to a furniture device comprising the drive arrangement.

### PRIOR ART

Prior art drive arrangements for furniture devices are arranged so that the drive arrangement comprises a plurality of electric motors that are used for reorienting the furniture device in order to provide comfort to the user. For example, the pluralities of electric motors are used for displacing the back-rest and the foot-rest of the furniture device. In another application the plurality of electric motors are used in order displace a plate member of a madras of the furniture device between different positions so to adjust the firmness of the madras.

For the stability of such reorientation of the furniture device, in particular when the furniture device is subjected to the weight of the user, it is necessary that the drive arrangement acts on a plurality of location on the furniture device. Accordingly, the pluralities of electric motors are necessary for such reorientation of the furniture device.

A problem with the use of the plurality of electric motors is that their operation needs to be synchronized. Without appropriate synchronization the furniture device may be set to an incorrect orientation that subjects arms and joints of the furniture device to stresses that may increase the wear of the device, prevent further reorientation of the furniture device or permanently damage the furniture device.

In case of the displacement of above mentioned plate member, it is necessary that the plate member is maintained in a horizontal orientation during the displacement of the plate member between the first and the second position. If one or more of the electric motor would be unsynchronized the plate member could depart from the horizontal orientation with the result that the plate member becomes wedged between its opposing wall sections resulting in that the plate member becomes immobilized.

The above necessary synchronization is obtained by means of a synchronization unit that controls the operation of the plurality of electric motors. A problem is that the function of the synchronization unit is essential for the reorientation of the furniture device. Furthermore, the synchronization unit adds cost to the design of the furniture device. Yet another problem is that the furniture device prior to use must be set into certain predetermined orientation that provides a reference position for synchronizing the electric motors. In particular, in case of a power failure the process of synchronizing the electric motors must be repeated. A further problem with prior art drive arrangement is that the plurality of electric motors requires space under the furniture device. The extent of the drive arrangement may in some situation set limits to the design of the furniture device. Furthermore, in case the furniture device is a bed, the available space for storage is reduced by the extent of the drive arrangement. Likewise, the extent of the drive arrangement may obstruct and complicate cleaning under the bed.

Yet another problem with prior art drive arrangement is that the function of the drive arrangement ceases if the operation of one of the plurality of electric motors ceases. Furthermore, the assembly of the plurality of electric motors of the drive arrangement is time consuming therefore add cost to the design.

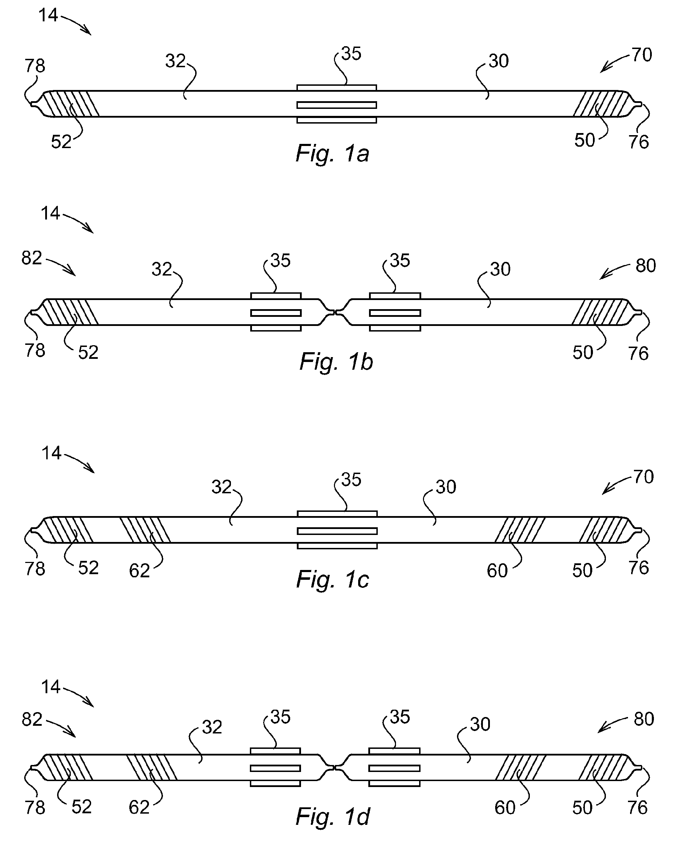

US5829077 discloses an electric motor and a drive arrangement for pivoting a back rest a furniture device. An electric motor normally requires a high operational rotation of the rotor and thereto connected motor shaft with more than 3000 revolutions per minute, and in any case at least 1000 revolutions per minute. At lower operational rotation of the rotor the electric motor lacks sufficient torque moment. The motor disclosed in fig. 1, however, includes an internal gear arrangement that gear down the rotation from an fully internal shaft (not disclosed in the figure) to a first external shaft 14 that partly is located within the housing of the motor and partly located outside the housing, because the primary and secondary transfer member 12, 13 directly transfers the rotation of the first external shaft 14 to the second external shaft 11 without gearing down the speed. Without the internal gear arrangement in the electric motor of the disclosed drive arrangement, the first external shaft 14 would act on the second external shaft 11 with above mentioned speed of rotation. Such high speed of rotation does not represent the technical reality of rotational speed used for pivoting the back rest of the furniture device.

US 6 000 007 A discloses a drive unit for a furniture device. The drive unit comprises a motor and a plurality of drive shafts for each adjustable function. The drive unit further comprises a solenoid arranged to interchangeably couple the motor to the drive shafts.

CN 201 674 340 U discloses a motor which comprises a casing, a rotating shaft, a rotor assembly and a stator assembly. The motor is arranged so that two ends of the rotating shafts protrude out from the casing.

### OBJECTS AND SUMMARY OF THE INVENTION

The object of the present invention is an improved electric motor and an improved drive arrangement for reorienting a furniture device by acting on a plurality of location on the furniture device. The object of the present invention also relates to a furniture device comprising the claimed electric motor and drive arrangement. A first object of the invention is an electric motor and drive arrangement, which electric motor of the drive arrangement does not require synchronization during reorienting the furniture device. A second object of the invention is an electric motor and drive arrangement that are less extensive in comparison to prior art. A third object of the invention is a drive arrangement that requires less components in comparison to prior art drive arrangements.

These objects are achieved by an electric motor according to claim 1.

By means of that both the first end part and the second end part are fixedly joined to the rotor, the first end part and the second end part will rotate with the same speed as the rotor. The first end part and the second end part extend in different direction and therefore are adapted to act on different location of the furniture device. Accordingly, the rotor is adapted to act on both the first and the second end part simultaneously resulting in that the rotation of the first end part and the second end part are synchronized without the need of separated synchronization unit as would be the case of two separate electric motors.

Furthermore, by means of that the first end part and the second end part are fixedly joined to the rotor the extent of the motor is reduced in comparison to the extent of two separate electric motors. Moreover, a drive arrangement comprising the motor according to claim 1 comprises less components in comparison to prior art drive arrangements.

According to one embodiment of the invention, the first end part and the second end part are fixedly joined with the rotor by means of a connection arrangement that assures that the first end part and the second end part rotate with said same speed.

The connection arrangement assures that the first end part and the second end part during operation of the motor always rotate with said same speed. Thereby, it is assured that the first end part and the second end part rotate with the same speed and accordingly no synchronization unit is needed.

According to one embodiment of the invention, the cover comprises a first side and a second side facing away from the first side, wherein the first end part comprises a first end located outside the first side of the cover and the second end part comprises a second end located outside the second side of the cover, and wherein the first end part and the second end part is formed by a common solid elongated body that extends between the first end and the second end.

The first end part and the second end part comprise the same common shaft that comprises the solid elongated body extending between the first end and the second end. The common shaft provides benefits when assembling the motor in that the common shaft is mounted by pressing the shaft from one of the first and the second side through the rotor so to form an attachment with the rotor. Thereby, it is assured that the first end part and the second end part are aligned with each other.

According to one embodiment of the invention, the shaft comprises a plurality of protruding members that protrudes away from the longitudinal axis of the common shaft and along a portion of the longitudinal axis, wherein the protruding members are adapted to form an attachment with the rotor.

According to one embodiment of the invention, the rotor comprises an opening with an inner envelope surface of a first material and the shaft has a cross section that corresponds to the opening of the rotor, wherein the common shaft is adapted to be fixedly attached to the rotor by pushing the shaft through the opening of the rotor so that the protruding member cuts into the second material. Thereby, the shaft is fixedly joined to the rotor by pushing the shaft from one direction through the opening of the rotor. The protruding members are preferably arranged symmetrically around the circumference of the shaft, which provides a symmetric attachment of the shaft to the rotor.

According to one embodiment of the invention, the first material is a polymeric material and the second material is a metal material. The first material is softer than the metal material and thereby allows the protruding elements of the metal material to cut into the polymeric material in order to fixedly join the motor shaft with the rotor.

According to one embodiment of the invention, the cover comprises a first side and a second side facing away from the first side, the first end part comprises a first end located outside the first side of the cover and the second end part comprises a second end located outside the second side of the cover, wherein the first end part is formed by a first solid elongated body that extends from the first end to the connection arrangement, the second end part is formed by a second solid elongated body that extends from the second end to the connection arrangement, wherein the first end part and the second end part are separated from each other.

According to one embodiment of the invention, the first end part comprises a first primary gear member adapted to engage with a first secondary gear member at a first receiving shaft of a drive arrangement of the furniture device and the second end part comprises a second primary gear member adapted to engage with a second secondary gear member at a second receiving shaft of the drive arrangement of the furniture device, which first and second primary gear members are adapted to transfer the rotation of the first end part and second end part to the first receiving shaft respective the second receiving shaft so that the rotation of the first and the second receiving shaft becomes lower than the rotation of the first end part and the second end part. The gear arrangement gears down the rotation from the motor shaft to the receiving shafts.

According to one embodiment of the invention, the first end part comprises a third primary gear member adapted to engage with a third secondary gear member at a third receiving shaft of the drive arrangement of the furniture device and the second end part comprises a fourth primary gear member adapted to engage with a fourth secondary gear member at a fourth receiving shaft of the drive arrangement of the furniture device, which third and fourth primary gear members are adapted to transfer the rotation of the first end part and second end part to the third receiving shaft respective the fourth receiving shaft so that the rotation of the third and the fourth receiving shaft becomes lower than the rotation of the first end part and the second end part.

According to one embodiment of the invention, the primary gear members comprise a threading adapted to engage with a respective threading of the secondary gear members of the receiving shafts.

According to one embodiment of the invention, the threading of the primary gear members have a same first pitch and the threading of the secondary gear members are adapted to have a same second pitch. Thereby, it is assured that the rotation of receiving shafts will have the same speed of rotation without synchronization, which is necessary for certain applications, such as when displacing a plate member while maintaining the orientation of the plate member.

According to one embodiment of the invention, the threading of the primary gear members and the secondary gear members are arranged so that one of the receiving shafts is given a first speed of rotation and at least one of the other receiving shafts is given a second speed of rotation, which first speed of rotation is higher than the second speed of rotation. Thereby, a single motor can be used or operating at different location on the furniture device which requires different speed of rotation. The different location on the furniture device may relate to different function of reorienting or repositioning the furniture device.

According to one embodiment of the invention, wherein the electric motor is a direct current electric motor configured to operate with a rotational speed of the rotor of more than 600 revolutions per minute, preferably more than 3000 revolutions per minute.

The object of the invention is further solved by a drive arrangement according to claim 6, which drive arrangement is characterized in that the drive arrangement comprises an electric motor according to any of claim 1-5, a first receiving shaft, a second receiving shaft and a gear arrangement comprising a first primary gear member at the first end part and a first secondary gear member at the first receiving shaft, which first primary gear member and first secondary gear member engage with each other so that a rotation of the first end part is transferred to the first receiving shaft, and wherein the gear arrangement further comprises a second primary gear member at the second end part and a second secondary gear member at the second receiving shaft, which second primary gear member and second secondary gear member engage with each other so that a rotation of the second end part is transferred to the second receiving shaft, wherein the gear arrangement is configured so that the rotation of the first receiving shaft and the second receiving shaft becomes lower than the rotation of the first end part respectively the second end part.

According to one embodiment of the invention, the drive arrangement further comprises a third receiving shaft and a fourth receiving shaft, wherein the gear arrangement comprises a third primary gear member on the first end part, a third secondary gear member on the third receiving shaft, a fourth primary gear member on the second end part and a fourth secondary gear member on the fourth receiving shaft, which third primary gear member and third secondary gear member engage with each other so that the rotation of the first end part is transferred to the third receiving shaft, and which fourth primary gear member and fourth secondary gear member engage with each other so that the rotation of the second end part is transferred to the fourth receiving shaft, wherein the gear arrangement is configured so that the rotation of the third receiving shaft and the fourth receiving shaft becomes lower than the rotation of the first end part respectively the second end part.

According to one embodiment of the invention, the third receiving shaft is directed in the opposite direction of the first receiving shaft and the fourth receiving shaft is directed in the opposite direction of the second receiving shaft.

According to one embodiment of the invention, the drive arrangement further comprises a further receiving shaft for each receiving shaft and a further gear arrangement between the receiving shaft and the further receiving shafts, which further gear arrangement is adapted to transfer the rotation of the receiving shafts to the further receiving shafts, wherein the first end part, the second end part and the receiving shafts are oriented in a common plane and the further receiving shafts are oriented inclined to said common plane, preferably perpendicularly to the common plane.

According to one embodiment of the invention, the further gear arrangement comprises a further primary gear member at the receiving shaft and a further secondary gear member at the further receiving shaft, which further primary gear member and further secondary gear member engage with each other so that the rotation of the receiving shaft is transferred to the further receiving shafts.

According to one embodiment of the invention, the drive arrangement comprises a respective displacement member arranged at each receiving shaft or further receiving shaft, which displacement members are adapted to be displaced along the further receiving shafts while acting on the furniture device so that the furniture device is reoriented between a first and a second orientation.

According to one embodiment of the invention, the displacement members are non-rotating during said displacement.

According to one embodiment of the invention, the primary gear members comprises a respective threading having a same first pitch and the secondary gear member comprises a respective threading having a same second pitch.

According to one embodiment of the invention, the further primary gear members comprises a respective threading having a same third pitch and the secondary gear member comprises a respective threading having a same fourth pitch.

According to one embodiment of the invention, the gear arrangement is configured so that the ratio between the speed of the motor shaft and the respective receiving shaft is between 25 and 500, preferably between 50 and 300.

The object of the invention is further solved by a furniture device according to claim 12 comprising the drive arrangement according to any of claim 6-11 and/or in combination with above mentioned embodiments of the drive arrangement.

According to one embodiment of the invention, the furniture device is a bed.

According to one embodiment of the invention, the furniture device comprises a plate member adapted to be displaced between a first position and a second position, wherein the drive arrangement is configured so that the receiving shaft or shafts on the first end part and the receiving shaft or shafts on the second end part acts on different parts of the plate member while displacing the plate member.

According to one embodiment of the invention, the plate member comprises a first and a second corner area on a first side of plate member and a third and a fourth corner area on a second side of the plate member, which first and second side are opposite sides of the plate member, wherein the further receiving shafts on the first end part act on the first and the second corner areas, and the further receiving shafts on the second end part act on the third and the fourth corner areas.

According to one embodiment of the invention, the furniture device comprises an end section adapted to be pivoted between a first and second orientation, wherein the drive arrangement is adapted to act on a first part and a second part of the end section while pivoting the end section.

Thereby, the end section of the furniture device is pivoted between a first orientation and a second orientation with more even speed and improved stability in comparison to prior art drive arrangements. Furthermore, the design of the end section and drive arrangement may be less rigid in comparison to prior art.

According to one embodiment of the invention, the furniture device comprises a back rest adapted to be pivoted between a first and second orientation, wherein the drive arrangement is adapted to act on the first part and second part of the back rest while pivoting the back rest.

According to one embodiment of the invention, the furniture device comprises a foot rest adapted to be lifted between a first and second position, wherein the drive arrangement is adapted to act on the first part and second part of the foot rest while lifting the foot rest.

### BRIEF DESCRIPTION OF THE DRAWINGS

The invention will now be explained more closely by the description of different embodiments of the invention and with reference to the appended figures.
- Fig. 1-4: shows a side view of components of an electric motor.
- Fig. 5: shows a side view of an electric motor comprising the components of figure 1a/1b and figure 2 - 4.
- Fig. 6: shows a side view of an electric motor comprising the components of fig. 1c/1d and figure 2 - 4.
- Fig. 7a: shows a side view of the drive arrangement for a furniture device according to a first embodiment of the invention, where a plate member of a furniture device is in a first position.
- Fig. 7b: shows the drive arrangement in figure 7a, where the plate member of the furniture device is in a second position.
- Fig. 8: shows a drive arrangement for a furniture device according to a second embodiment of the invention.
- Fig. 9: shows a drive arrangement for a furniture device according to a third embodiment of the invention.

### DETAILED DESCRIPTION OF PREFERRED EMBODIMENTS OF THE INVENTION

An electric motor 1 and a drive arrangement 3 for a furniture device 5 are now to be described with reference to figure 1 - 9. Furthermore, different embodiments of a furniture device 5 comprising the electric motor 1 and the drive arrangement 3 will be explained with reference to the appended figures.

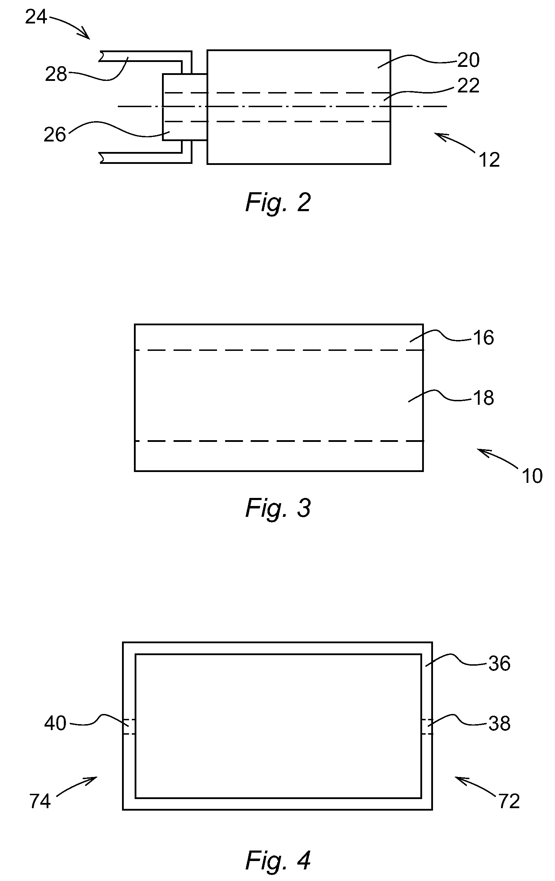

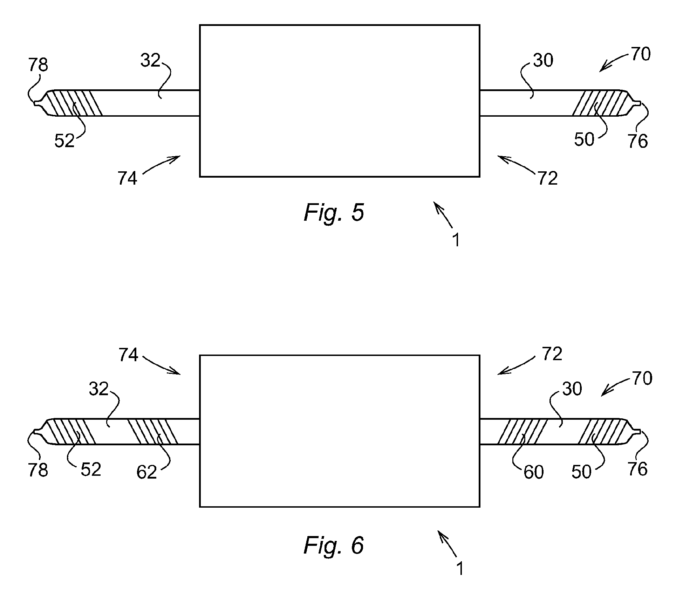

Fig. 1 to 4 discloses a side view of the components of the electric motor 1 shown in figure 5. The electric motor 1 comprises a stator 10 shown in figure 3, and a rotor 12, shown in figure 2. The electric motor 1 further comprises an elongated motor shaft 14 shown in figure 1a - 1d.

The stator 10 comprises a first body 16 comprising a permanent magnet and a first space 18 adapted to accommodate the rotor 12. The rotor 12 comprises a second body 20 comprising a plurality of electromagnets. The rotor 12 comprises a second space 22 in the second body 20 adapted to receive the elongated motor shaft 14.

The rotor 12 further comprises a commutator arrangement 24. The commutator arrangement 24 comprises rotary arranged contacts 26 adapted to rotate with the rotation of the rotor 12. The commutator arrangement 24 further comprises a static mounted conductor arrangement 28 adapted to establish electrical contact with the rotary arranged contacts 26 in a sequence that results in the rotation of the rotor 12 and the motor shaft 14 in relation to the stator 10.

The motor shaft 14 comprises a first end part 30 and a second end part 32 fixedly joined to the rotor 12 so that the first end part 30, the second end part 32 and the rotor 12 rotate with the same speed. The first end part 30 and the second end part 32 are fixedly joined with the rotor 12 by means of a connection arrangement that assures that the first end part 30 and the second end part 32 rotates with the same speed in relation to the stator 10.

The connection arrangement comprises protruding elements 35 that protrudes from the longitudinal axis of the motor shaft 14. The body 20 of the rotor comprise a lining of the second space 22. The lining is of a softer material than the protruding elements 35. The motor shaft 14 is fixedly joined with the rotor 12 by pushing the motor shaft 14 into the second space 22 until positioned according to fig. 5 or 6. When the motor shaft 14 pushed through the second space 22 the protruding elements 35 cuts into the lining and thereby forms a rigid connection between the motor shaft 14 and the rotor 12.

The electric motor 1 further comprises a cover 36 that encloses the stator 10 and the rotor 12, see fig 4. The cover 36 comprises a first opening 38 and a second opening 40. The electric motor 1 is arranged so that the first end part 30 of the motor shaft 14 extends from the connection arrangement through the first opening 38 in a first direction and the second end part 32 extends from the connection arrangement through the second opening 40 in a second direction. The second direction is opposite to the first direction. The cover 36 further comprises an opening for the conductor arrangement 28 (not disclosed in fig.4).

In figure 1a - 1d different embodiments of the motor shaft 14 is disclosed. In figure 1 a and 1 b the first end part 30 of the motor shaft 14 comprises a first primary gear member 50 adapted to engage with a first secondary gear member at a first receiving shaft. The second end part 32 of the motor shaft 14 comprises a second primary gear member 52 adapted to engage with a second secondary gear member at a second receiving shaft. The first primary gear member 50 and the second primary gear member 52 are adapted to transfer the rotation of the first end part 30 and the second end part 32 to the first receiving shaft respectively the second receiving shaft in such a way that the rotation of the first receiving shaft and the second receiving shaft becomes lower than the rotation of the first end part 30 and the second end part 32. The gear arrangement is configured so that the first and the second receiving shaft obtain the same speed of rotation.

Figure 1c and 1d discloses motor shafts 14 that in addition to the first primary gear member 50 and the second primary gear member 52 comprises a third primary gear member 60 that is adapted to engage with a third secondary gear member at a third receiving shaft. The motor shafts 14 further comprises a fourth primary gear member 62 adapted to engage with a fourth secondary gear member at a fourth receiving shaft. The third primary gear member 60 and the fourth primary gear member 62 are adapted to transfer the rotation of the first end part 30 and the second end part 32 to the third receiving shaft respectively the fourth receiving shaft so that the rotation of the third receiving shaft and the fourth receiving shaft becomes lower then the rotation of the first end part 30 and the second end part 32.

In figure 1 a and 1 c the motor shafts 14 are arranged so that the first end part 30 and the second end part 32 is formed by a common solid elongated body 70. The cover 36 comprises a first side 72 and a second side 74 facing away from the first side 72. The first end part 30 comprises a first end 76 located outside the first side of the cover 36 and the second end part 32 comprises a second end 78 located outside the second side 74. The motor shafts 14 are arranged so that the common solid elongated body 70 extends between the first end 76 and the second end 78. Accordingly, the motor shafts 14 of figure 1 a and 1 c comprises a single shaft that extends from the first end part 30 in to the first opening 38 through the second space 22 and out through the second opening 40 on the second side 74 of the cover 36.

In figure 1b and 1d the motor shaft 14 comprises two parts. The first end part 30 of the motor shaft 14 is formed by a first solid elongated body 80 and the second end part 32 is formed by a second solid elongated body 82. The first solid elongated body 80 extends from the first end 76 to the connection arrangement and the second elongated body 82 extends from the second end 78 to the connection arrangement. Accordingly the first end part and the second end part are separated from each other.

The electric motor 1 comprising the motor shaft 14 according to the embodiment shown in figure 1 a and 1 b are shown in figure 5. The electric motor 1 comprising the motor shaft 14 according to the embodiment of figure 1c and 1d are shown in figure 6.

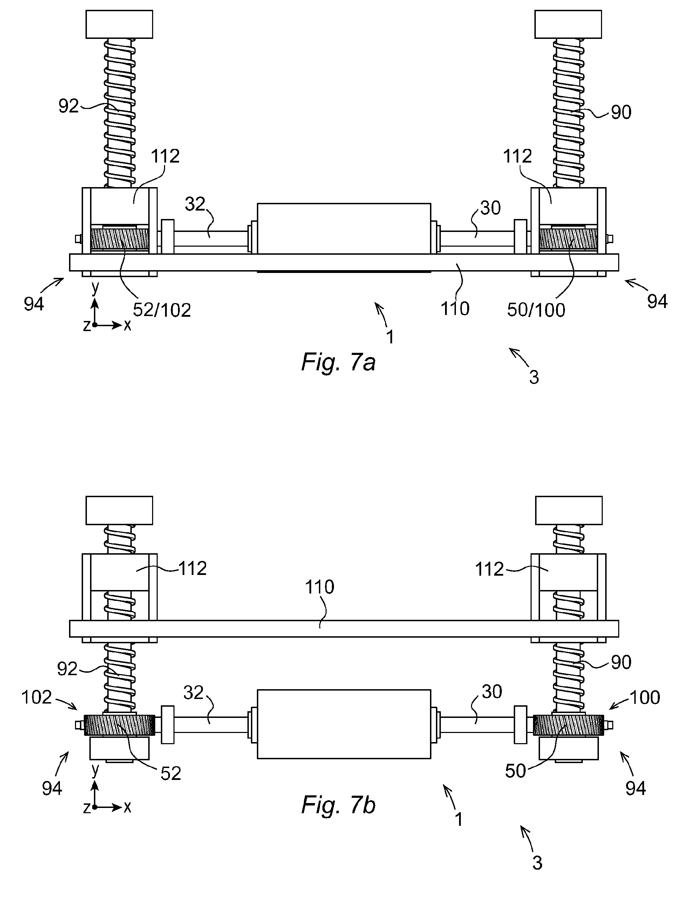

Figure 7a and 7b discloses a first embodiment of a drive arrangement 3 for a furniture device 5. The drive arrangement 3 comprises the electric motor 1. The drive arrangement further comprises a first receiving shaft 90, a second receiving shaft 92 and a gear arrangement 94 comprising a first primary gear member 50 at the first end part 30 and a first secondary gear member 100 at the first receiving shaft 90.

The first primary gear member 50 and the first secondary gear member 100 engage with each other so that a rotation of a first end part is transferred to the first receiving shaft 90. The drive arrangement 3 further comprises a second primary gear member 52 at the second end 32 and a second secondary gear member 102 at the second receiving shaft 92. The second primary gear member 52 and the second secondary gear member 102 engage with each other so that the rotation of the second end part is transferred to a second receiving shaft 92.

The gear arrangement 94 is configured so that the rotation of the first receiving shaft 90 and the second receiving shaft 92 becomes lower then the rotation of the first end part 30 and the second end part 32. Accordingly the gear arrangement 94 gears down the rotation from the first end part 30 and the second end part 32 to the first receiving shaft 90 and the second receiving shaft 92. The drive arrangement has the advantage that a single electric motor 1 is used for acting on two locations on the furniture device 5. Thereby the number of electric motors in the furniture device 5 can be reduced in comparison to prior art furniture devices.

In figure 7a and 7b the drive arrangement is used for displacing a plate member 110 between a first position and a second position. In figure 7a the plate member 110 is in the first position and in figure 7b in the second position. The plate member 110 is connected to a displacement member 112 at each of the first receiving shaft 90 and the second receiving shaft 92.

The plate member 110 is displaced from the first position to the second position by means of that the electric motor 1 induces the same rotation of the first end part 30 and the second end part 32 which rotation is transferred to the first receiving shaft 90 and the second receiving shaft 92 by means of the gear arrangement 94 at the first end part 30 respectively the second end part 32.

The first receiving shaft 90 and the second receiving shaft 92 comprise a threading on which the displacement member 112 is displaced along. The displacement member 112 is for example an internally threaded nut that upon rotation of the first receiving shaft 90 and the second receiving shaft 92 are displaced perpendicular away from the electric motor 1 or towards the electric motor 1.

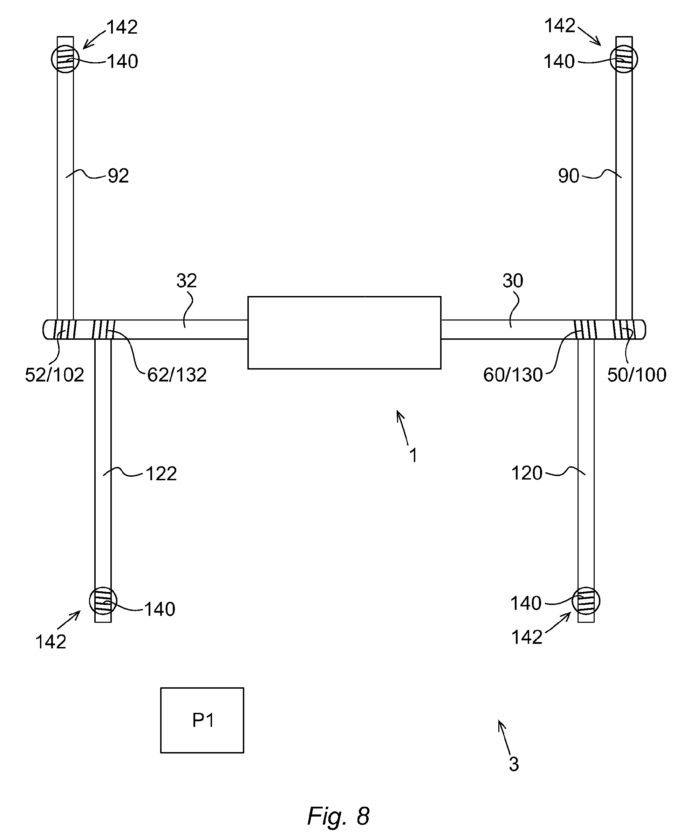

Figure 8 discloses a second embodiment of the drive arrangement 3. The drive arrangement 3 further comprises a third receiving shaft 120 and a fourth receiving shaft 122. The gear arrangement 94 further comprises a third primary gear member 60 on the first end part 30, a third secondary gear member 130 on the third receiving shaft 120, a fourth primary gear member 62 on the second end part 32 and a fourth secondary gear member 132 on the fourth receiving shaft 122. The third primary gear member 60 and the third secondary gear member 130 engage with each other so that the rotation of the first end part 30 is transferred to the third receiving shaft 120. The fourth primary gear member 62 and the fourth secondary gear member 132 engage with each other so that the rotation of the second end part 32 is transferred to the fourth receiving shaft 122.

The gear arrangement 94 is arranged so that the rotation of the first receiving shaft 90, the second receiving shaft 92, the third receiving shaft 120 and the fourth receiving shaft 122 becomes lower then the rotation of a first end part 30 respectively the second end part 32. Preferably, the gear arrangement is configured so that the receiving shafts 90, 92, 120, 122 obtain the same speed of rotation that is lower than the speed of rotation of the motor shaft 14. Alternatively, the gear arrangement is configured so that one or more of the receiving shafts 90, 92, 120, 122 obtain a different speed of rotation in comparison to the other receiving shafts 90, 92, 120, 122. Thereby, the single motor 1 is used for different function of reorienting or repositioning the furniture device.

The drive arrangement shown in figure 8 is preferably oriented in a common plane P1. The drive arrangement 3 further comprises a further receiving shaft 140 for each receiving shaft 90, 92, 120, 122. The further receiving shafts 140 are indicated by a circle on the receiving shafts 90, 92, 120, 122. The further receiving shafts 140 are oriented perpendicular to the common plane P1. The drive arrangement 3 also comprises a further gear arrangement 142 that transfer the rotation of the receiving shafts 90, 92, 120, 122 to the further receiving shafts 140. Preferably, the further gear arrangement 142 is configured so that rotation is transferred to the further receiving shafts 140 without changing the speed of rotation between the receiving shafts 90, 92, 120, 122 and the respective further receiving shafts 140.

By means of the drive arrangement 3 disclosed in figure 8, it is possible to use a single electric motor 1 for displacing a plate member 110 between the first position and the second position. Each of the further receiving shafts 140 are arranged with displacement member 112 (not disclosed) that displaces the plate member 110 between the first position and the second position. Preferably, the further receiving shafts 140 act on a respective corner area of the plate member 110.

In fig. 8, the electric motor 1 is arranged in the centre of the above located plate member 110. It shall be understood that the alternative locations of the electric motor 1 is possible. For example, the electric motor 1 may be located in respect to a side of the plate member 110.

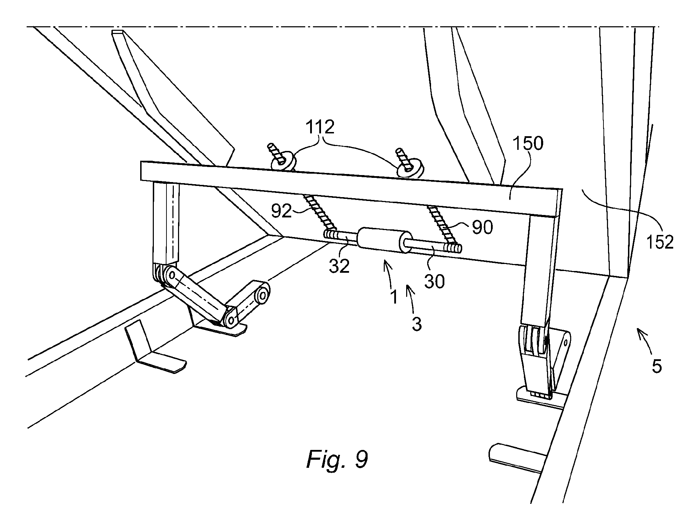

Figure 9 discloses a second embodiment of the drive arrangement 3 for a furniture device 5. The drive arrangement 3 is used for pivoting an end section 152 of the furniture device 5. Both the first receiving shaft 90 and the second receiving shaft 92 acts on the bar 150 of the furniture device 5 on two different locations. The gear arrangement is configured so that the first receiving shaft 90 and the second receiving shaft 92 obtain the same speed of rotation. Thereby, the displacement members 112 on the receiving shafts 90, 92 are displaced with the same speed along the respective receiving shaft 90, 92. The displacement members 112 act on the bar 150 so that the bar is pulled towards the motor 1 or pushed away from the motor 1. The displacement member 112 is for example a threaded nut or similar internal threaded element.

By means of the arrangement, the end section 152 of the furniture device 5 is pivoted between a first orientation and a second orientation with more even speed and improved stability in comparison to prior art drive arrangements 3 for furniture devices 5. Furthermore, it is possible to use a less rigid bar 150 in the furniture device 5 and there is less risk that the drive arrangement 3 is uneven displaced in comparison to prior art.

The present invention is not limited to the embodiments disclosed but may be varied and modified within the scope of the following claims.

It shall be understood that any number of receiving shafts 90, 92, 120, 122 and further receiving shafts 140 may be arranged to the first end part 30 and the second end part 32 of the motor shaft 14 of the electric motor 1.

## Claims

1. An electric motor (1) for a furniture device (5), wherein the electric motor (1) comprises a stator (10) and a rotor (12) set into rotation in relation to the stator (10), and wherein the motor (1) further comprises an elongated motor shaft (14) comprising a first end part (30) fixedly joined to the rotor (12) so that the first end part (30) and the rotor (12) rotate with the same speed, and a cover (36) enclosing the stator (10) and the rotor (12), which cover (36) comprises a first opening (38) through which the first end part (30) of the shaft extends in a first direction, wherein the motor shaft (14) further comprises a second end part (32) fixedly joined to the rotor (12) so that the second end part (32) and the rotor (12) rotate with said same speed, wherein the cover (36) further comprises a second opening (40) through which the second end part (32) of the motor shaft (14) extends in a second direction, which second direction is opposite to the first direction, wherein the first end part (30) comprises a first primary gear member (50) engageable with a first secondary gear member (100) at a first receiving shaft (90) of a drive arrangement (3) of the furniture device (5) and the second end part (32) comprises a second primary gear member (52) engageable with a second secondary gear member (102) at a second receiving shaft (92) of the drive arrangement (3) of the furniture device (5),
**characterized in that**
the primary gear members (50, 52) comprise a threading engageable with a respective threading of the secondary gear members (100, 102) of the receiving shafts, wherein the first primary gear member (50) and second primary gear member (52) are adapted to transfer the rotation of the first end part (30) and second end part (32) respectively to the first receiving shaft (90) and the second receiving shaft (92) so that the rotation of the first receiving shaft (90) and the second receiving shaft (92) becomes lower than the rotation of the first end part (30) and the second end part (32).

2. The electric motor (1) according to claim 1, wherein the first end part (30) and the second end part (32) are fixedly joined with the rotor (12) by means of a connection arrangement that assures that the first end part (30) and the second end part (32) rotate with said same speed.

3. The electric motor (1) according to any of claim 1 and 2, wherein the cover (36) comprises a first side (72) and a second side (74) facing away from the first side (72), wherein the first end part (30) comprises a first end located outside the first side (72) of the cover (36) and the second end part (32) comprises a second end located outside the second side (74) of the cover (36), and wherein the first end part (30) and the second end part (32) are formed by a common solid elongated body (70) that extends between the first end and the second end.

4. The electric motor (1) according to claim 1, wherein the first end part (30) comprises a third primary gear member (60) adapted to engage with a third secondary gear member (130) at a third receiving shaft (120) of the drive arrangement (3) of the furniture device (5) and the second end part (32) comprises a fourth primary gear member (62) adapted to engage with a fourth secondary gear member (132) at a fourth receiving shaft (122) of the drive arrangement (3) of the furniture device (5), which third primary gear member (60) and fourth primary gear member (62) are adapted to transfer the rotation of the first end part (30) and second end part (32) to the third receiving shaft (120) respective the fourth receiving shaft (122) so that the rotation of the third and the fourth receiving shaft (122) becomes lower than the rotation of the first end part (30) and the second end part (32).

5. A drive arrangement (3) for a furniture device (5), the drive arrangement (3) comprises an electric motor (1) according to any of claim 1-4, a first receiving shaft (90), a second receiving shaft (92) and a gear arrangement (94) comprising a first primary gear member (50) at the first end part (30) and a first secondary gear member (100) at the first receiving shaft (90), which first primary gear member (50) and first secondary gear member (100) engage with each other so that a rotation of the first end part (30) is transferred to the first receiving shaft (90), and wherein the gear arrangement (94) further comprises a second primary gear member (52) at the second end part (32) and a second secondary gear member (102) at the second receiving shaft (92), which second primary gear member (52) and second secondary gear member (102) engage with each other so that a rotation of the second end part (32) is transferred to the second receiving shaft (92),
**characterized in that**
the primary gear members (50, 52) comprise a threading adapted to engage with a respective threading of the secondary gear members (100, 102) of the receiving shafts, wherein the gear arrangement (94) is configured so that the rotation of the first receiving shaft (90) and the second receiving shaft (92) becomes lower than the rotation of the first end part (30) respectively the second end part (32).

6. The drive arrangement (3) according to claim 5, wherein the drive arrangement (3) further comprises a third receiving shaft (120) and a fourth receiving shaft (122), wherein the gear arrangement (94) comprises a third primary gear member (60) on the first end part (30), a third secondary gear member (130) on the third receiving shaft (120), a fourth primary gear member (62) on the second end part (32) and a fourth secondary gear member (132) on the fourth receiving shaft (122), which third primary gear member (60) and third secondary gear member (130) engage with each other so that the rotation of the first end part (30) is transferred to the third receiving shaft (120), and which fourth primary gear member (62) and fourth secondary gear member (132) engage with each other so that the rotation of the second end part (32) is transferred to the fourth receiving shaft (122), wherein the gear arrangement (94) is configured so that the rotation of the third receiving shaft (120) and the fourth receiving shaft (122) becomes lower than the rotation of the first end part (30) respectively the second end part (32).

7. The drive arrangement (3) according to any of claim 5-6, wherein the drive arrangement (3) further comprises a further receiving shaft (140) for each receiving shaft and a further gear arrangement (142) between the receiving shaft and the further receiving shafts (140), which further gear arrangement (142) is adapted to transfer the rotation of the receiving shafts to the further receiving shafts (140), wherein the first end part (30), the second end part (32) and the receiving shafts are oriented in a common plane (P1) and the further receiving shafts (140) are oriented inclined to said common plane (P1), preferably perpendicularly to the common plane (P1).

8. The drive arrangement (3) according to claim 7, wherein the further gear arrangement (142) comprises a further primary gear member at the receiving shaft and a further secondary gear member at the further receiving shaft (140), which further primary gear member and further secondary gear member engage with each other so that the rotation of the receiving shaft is transferred to the further receiving shafts (140).

9. The drive arrangement (3) according to any of claim 5-8, wherein the drive arrangement (3) comprises a respective displacement member (112) arranged at the receiving shafts (90, 92, 120, 122) or further receiving shafts (140), which displacement members (112) are adapted to be displaced along the receiving shafts or further receiving shafts (140) while acting on the furniture device (5) so that the furniture device (5) is reoriented between a first and a second orientation.

10. The drive arrangement (3) according to any of claim 5-9, wherein the primary gear members (50, 52) comprises a respective threading having a same first pitch and the secondary gear member (100, 102) comprises a respective threading having a same second pitch.

11. A furniture device (5) **characterized in that** the device comprising a drive arrangement (3) according to any of claim 5-10.

12. The furniture device (5) according to claim 11, wherein the device comprises a plate member (110) adapted to be displaced between a first position and a second position, wherein the drive arrangement (3) is configured so that the first receiving shaft or shafts (90, 120) on the first end part (30) and the second receiving shaft or shafts (92, 122) on the second end part (32) acts on different parts of the plate member (110) while displacing the plate member (110).

13. The furniture device (5) according to any of claim 11 and 12, wherein the plate member (110) comprises a first and a second corner area on a first side of plate member (110) and a third and a fourth corner area on a second side of the plate member (110), which first and second side are opposite sides of the plate member (110), wherein the further receiving shafts (140) on the first end part (30) act on the first and the second corner areas, and the further receiving shafts (140) on the second end part (32) act on the third and the fourth corner areas.

14. The furniture device (5) according to any of claim 11-13, wherein the device (5) comprises an end section (152) adapted to be pivoted between a first and second orientation, wherein the drive arrangement (3) is adapted to act on a first part and a second part of the end section (152) while pivoting the end section (152).

## Patentansprüche

1. Elektromotor (1) für eine Ausstattungsvorrichtung (5), wobei der Elektromotor (1) einen Stator (10) und einen in Bezug auf den Stator (10) in Umdrehung versetzten Rotor (12) umfasst und wobei der Motor (1) ferner eine gestreckte Motorwelle (14), die ein erstes Endteil (30) umfasst, das fest mit dem Rotor (12) verbunden ist, sodass sich das erste Endteil (30) und der Rotor (12) mit derselben Geschwindigkeit drehen, und eine den Stator (10) und den Rotor (12) umgebende Abdeckung (36) umfasst, wobei die Abdeckung (36) eine erste Öffnung (38) umfasst, durch die sich das erste Endteil (30) der Welle in eine erste Richtung erstreckt, wobei die Motorwelle (14) ferner ein zweites Endteil (32) umfasst, das fest mit dem Rotor (12) verbunden ist, sodass sich das zweite Endteil (32) und der Rotor (12) mit derselben Geschwindigkeit drehen, wobei die Abdeckung (36) ferner eine zweite Öffnung (40) umfasst, durch die sich das zweite Endteil (32) der Motorwelle (14) in eine zweite Richtung erstreckt, wobei die zweite Richtung zur ersten Richtung entgegengesetzt ist, wobei das erste Endteil (30) ein erstes primäres Getriebeglied (50) umfasst, das mit einem ersten sekundären Getriebeglied (100) an einer ersten Aufnahmewelle (90) einer Antriebsanordnung (3) der Ausstattungsvorrichtung (5) in Eingriff bringbar ist, und wobei das zweite Endteil (32) ein zweites primäres Getriebeglied (52) umfasst, das mit einem zweiten sekundären Getriebeglied (102) an einer zweiten Aufnahmewelle (92) der Antriebsanordnung (3) der Ausstattungsvorrichtung (5) in Eingriff bringbar ist,
**dadurch gekennzeichnet, dass**
die primären Getriebeglieder (50, 52) ein Gewinde umfassen, das mit einem jeweiligen Gewinde der sekundären Getriebeglieder (100, 102) der Aufnahmewellen in Eingriff bringbar ist, wobei das erste primäre Getriebeglied (50) und das zweite primäre Getriebeglied (52) angepasst sind, die Umdrehung des ersten Endteils (30) und des zweiten Endteils (32) jeweils so auf die erste Aufnahmewelle (90) bzw. die zweite Aufnahmewelle (92) zu übertragen, dass die Umdrehung der ersten Aufnahmewelle (90) und der zweiten Aufnahmewelle (92) geringer als die Umdrehung des ersten Endteils (30) und des zweiten Endteils (32) ist.

2. Elektromotor (1) nach Anspruch 1, wobei das erste Endteil (30) und das zweite Endteil (32) mittels einer Verbindungsanordnung, die gewährleistet, dass sich das erste Endteil (30) und das zweite Endteil (32) mit derselben Geschwindigkeit drehen, fest mit dem Rotor (12) verbunden sind.

3. Elektromotor (1) nach einem der Ansprüche 1 und 2, wobei die Abdeckung (36) eine erste Seite (72) und eine von der ersten Seite (72) abgewandte zweite Seite (74) umfasst, wobei das erste Endteil (30) ein außerhalb der ersten Seite (72) der Abdeckung (36) angeordnetes erstes Ende umfasst und das zweite Endteil (32) ein außerhalb der zweiten Seite (74) der Abdeckung (36) angeordnetes zweites Ende umfasst und wobei das erste Endteil (30) und das zweite Endteil (32) durch einen gemeinsamen gestreckten Festkörper (70), der sich zwischen dem erste Ende und dem zweiten Ende erstreckt, ausgebildet sind.

4. Elektromotor (1) nach Anspruch 1, wobei das erste Endteil (30) ein drittes primäres Getriebeglied (60) umfasst, das angepasst ist, mit einem dritten sekundären Getriebeglied (130) an einer dritten Aufnahmewelle (120) der Antriebsanordnung (3) der Ausstattungsvorrichtung (5) in Eingriff zu stehen, und wobei das zweite Endteil (32) ein viertes primäres Getriebeglied (62) umfasst, das angepasst ist, mit einem vierten sekundären Getriebeglied (132) an einer vierten Aufnahmewelle (122) der Antriebsanordnung (3) der Ausstattungsvorrichtung (5) in Eingriff zu stehen, wobei das dritte primäre Getriebeglied (60) und das vierte primäre Getriebeglied (62) angepasst sind, die Umdrehung des ersten Endteils (30) und des zweiten Endteils (32) so auf die dritte Aufnahmewelle (120) bzw. die vierte Aufnahmewelle (122) zu übertragen, dass die Umdrehung der dritten und der vierten Aufnahmewelle (122) geringer als die Umdrehung des ersten Endteils (30) und des zweiten Endteils (32) wird.

5. Antriebsanordnung (3) für eine Ausstattungsvorrichtung (5), wobei die Antriebsanordnung (3) einen Elektromotor (1) nach einem der Ansprüche 1 - 4, eine erste Aufnahmewelle (90), eine zweite Aufnahmewelle (92) und eine Getriebeanordnung (94) umfasst, die ein erstes primäres Getriebeglied (50) am ersten Endteil (30) und ein erstes sekundäres Getriebeglied (100) an der ersten Aufnahmewelle (90) umfasst, wobei das erste primäre Getriebeglied (50) und das erste sekundäre Getriebeglied (100) so miteinander in Eingriff stehen, dass eine Umdrehung des ersten Endteils (30) auf die erste Aufnahmewelle (90) übertragen wird, und wobei die Getriebeanordnung (94) ferner ein zweites primäres Getriebeglied (52) am zweiten Endteil (32) und ein zweites sekundäres Getriebeglied (102) an der zweiten Aufnahmewelle (92) umfasst, wobei das zweite primäre Getriebeglied (52) und das zweite sekundäre Getriebeglied (102) so miteinander in Eingriff stehen, dass eine Umdrehung des zweiten Endteils (32) auf die zweite Aufnahmewelle (92) übertragen wird,
**dadurch gekennzeichnet, dass**
die primären Getriebeglieder (50, 52) ein Gewinde umfassen, das angepasst ist, mit einem jeweiligen Gewinde der sekundären Getriebeglieder (100, 102) der Aufnahmewellen in Eingriff zu stehen, wobei die Getriebeanordnung (94) so gestaltet ist, dass die Umdrehung der ersten Aufnahmewelle (90) und der zweiten Aufnahmewelle (92) geringer als die Umdrehung des ersten Endteils (30) bzw. des zweiten Endteils (32) wird.

6. Antriebsanordnung (3) nach Anspruch 5, wobei die Antriebsanordnung (3) ferner eine dritte Aufnahmewelle (120) und eine vierte Aufnahmewelle (122) umfasst, wobei die Getriebeanordnung (94) ein drittes primäres Getriebeglied (60) am ersten Endteil (30), ein drittes sekundäres Getriebeglied (130) an der dritten Aufnahmewelle (120), ein viertes primäres Getriebeglied (62) am zweiten Endteil (32) und ein viertes sekundäres Getriebeglied (132) an der vierten Aufnahmewelle (122) umfasst, wobei das dritte primäre Getriebeglied (60) und das dritte sekundäre Getriebeglied (130) so miteinander in Eingriff stehen, dass die Umdrehung des ersten Endteils (30) auf die dritte Aufnahmewelle (120) übertragen wird, und wobei das vierte primäre Getriebeglied (62) und das vierte sekundäre Getriebeglied (132) so miteinander in Eingriff stehen, dass die Umdrehung des zweiten Endteils (32) auf die vierten Aufnahmewelle (122) übertragen wird, wobei die Getriebeanordnung (94) so gestaltet ist, dass die Umdrehung der dritten Aufnahmewelle (120) und der vierten Aufnahmewelle (122) geringer als die Umdrehung des ersten Endteils (30) bzw. des zweiten Endteils (32) wird.

7. Antriebsanordnung (3) nach einem der Ansprüche 5 - 6, wobei die Antriebsanordnung (3) ferner eine weitere Aufnahmewelle (140) für jede Aufnahmewelle und eine weitere Getriebeanordnung (142) zwischen der Aufnahmewelle und den weiteren Aufnahmewellen (140) umfasst, wobei die weitere Getriebeanordnung (142) angepasst ist, die Umdrehung der Aufnahmewellen auf die weiteren Aufnahmewellen (140) zu übertragen, wobei das erste Endteil (30), das zweite Endteil (32) und die Aufnahmewellen in einer gemeinsamen Ebene (P1) ausgerichtet sind und die weiteren Aufnahmewellen (140) geneigt zu dieser gemeinsamen Ebene (P1), vorzugsweise senkrecht zur gemeinsamen Ebene (P1) ausgerichtet sind.

8. Antriebsanordnung (3) nach Anspruch 7, wobei die weitere Getriebeanordnung (142) ein weiteres primäres Getriebeglied an der Aufnahmewelle und ein weiteres sekundäres Getriebeglied an der weiteren Aufnahmewelle (140) umfasst, wobei das weitere primäre Getriebeglied und das weitere sekundäre Getriebeglied so miteinander in Eingriff stehen, dass die Umdrehung der Aufnahmewelle auf die weiteren Aufnahmewellen (140) übertragen wird.

9. Antriebsanordnung (3) nach einem der Ansprüche 5 - 8, wobei die Antriebsanordnung (3) ein jeweiliges Verschiebungsglied (112) umfasst, das an den Aufnahmewellen (90, 92, 120, 122) oder den weiteren Aufnahmewellen (140) angeordnet ist, wobei die Verschiebungsglieder (112) angepasst sind, entlang der Aufnahmewellen bzw. weiteren Aufnahmewellen (140) verschoben zu werden, während sie auf die Ausstattungsvorrichtung (5) einwirken, sodass die Ausstattungsvorrichtung (5) zwischen einer ersten und einer zweiten Ausrichtung neu ausgerichtet wird.

10. Antriebsanordnung (3) nach einem der Ansprüche 5 - 9, wobei die primären Getriebeglieder (50, 52) ein jeweiliges Gewinde mit einer gleichen ersten Steigung umfasst und wobei das sekundäre Getriebeglied (100, 102) ein jeweiliges Gewinde mit einer gleichen zweiten Steigung umfasst.

11. Ausstattungsvorrichtung (5), **dadurch gekennzeichnet, dass** die Vorrichtung eine Antriebsanordnung (3) nach einem der Ansprüche 5 - 10 umfasst.

12. Ausstattungsvorrichtung (5) nach Anspruch 11, wobei die Vorrichtung ein Plattenglied (110) umfasst, das angepasst ist, zwischen einer ersten Position und einer zweiten Position verschoben zu werden, wobei die Antriebsanordnung (3) so gestaltet ist, dass die erste Aufnahmewelle bzw. ersten Aufnahmewellen (90, 120) am ersten Endteil (30) und die zweite Aufnahmewelle bzw. zweiten Aufnahmewellen (92, 122) am zweiten Endteil (32) während des Verschiebens des Plattenglieds (110) auf verschiedene Teile des Plattenglieds (110) einwirken.

13. Ausstattungsvorrichtung (5) nach einem der Ansprüche 11 und 12, wobei das Plattenglied (110) einen ersten und einen zweiten Eckbereich auf einer ersten Seite des Plattenglieds (110) und einen dritten und einen vierten Eckbereich auf einer zweiten Seite des Plattenglieds (110) umfasst, wobei die erste und die zweite Seite gegenüberliegende Seiten des Plattenglieds (110) sind, wobei die weiteren Aufnahmewellen (140) am ersten Endteil (30) auf den ersten und den zweiten Eckbereich einwirken und die weiteren Aufnahmewellen (140) am zweiten Endteil (32) auf den dritten und den vierten Eckbereich einwirken.

14. Ausstattungsvorrichtung (5) nach einem der Ansprüche 11 - 13, wobei die Vorrichtung (5) einen Endabschnitt (152) umfasst, der angepasst ist, zwischen einer ersten und einer zweiten Ausrichtung geschwenkt zu werden, wobei die Antriebsanordnung (3) angepasst ist, während des Schwenkens des Endabschnitts (152) auf ein erstes Teil und ein zweites Teil des Endabschnitts (152) einzuwirken.

## Revendications

1. Moteur électrique (1) pour un pour dispositif de mobilier (5), le moteur électrique 1) comprenant un stator (10) et un rotor (12) mis en rotation par rapport au stator (10), et le moteur (1) comprenant en outre un axe de moteur (14) allongé comportant une première partie d'extrémité (30) attachée de manière fixe au rotor (12) de façon que la première partie d'extrémité (30) et le rotor (12) tournent avec la même vitesse, et un capot (36) entourant le stator (10) et le rotor (12), lequel capot (36) comprend une première ouverture (38) par laquelle la première partie d'extrémité (30) de l'axe s'étend dans une première direction, l'axe de moteur (14) comprenant en outre une seconde partie d'extrémité (32) attachée de manière fixe au rotor (12) de façon que la seconde partie d'extrémité (32) et le rotor (12) tournent avec la même vitesse, le capot (36) comprenant en outre une seconde ouverture (40) par laquelle la seconde partie d'extrémité (32) de l'axe de moteur (14) s'étend dans une seconde direction, laquelle seconde direction étant opposée à la première direction, la première partie d'extrémité (30) comprenant un premier élément primaire d'engrenage (50) pouvant être engagé avec un premier élément secondaire d'engrenage (100) à un premier axe de réception (90) d'un agencement de commande (3) du dispositif de mobilier (5) et la seconde partie d'extrémité (32) comprenant un deuxième élément primaire d'engrenage (52) pouvant être engagé avec un deuxième élément secondaire d'engrenage (102) à un deuxième axe de réception (92) de l'agencement de commande (3) du dispositif de mobilier (5),
**caractérisé en ce que**
les éléments primaires d'engrenage (50, 52) comprennent un filetage pouvant être engagé avec un filetage respectif des éléments secondaires d'engrenage (100, 102) des axes de réception, le premier élément primaire d'engrenage (50) et le deuxième élément primaire d'engrenage (52) étant adaptés pour transférer la rotation de la première partie d'extrémité (30) et de la seconde partie d'extrémité (32) respectivement sur le premier axe de réception (90) et le deuxième axe de réception (92) de façon que la rotation du premier axe de réception (90) et du deuxième axe de réception (92) devienne plus faible que la rotation de la première partie d'extrémité (30) et de la seconde partie d'extrémité (32).

2. Moteur électrique (1) selon la revendication 1, **caractérisé en ce que** la première partie d'extrémité (30) et la seconde partie d'extrémité (32) sont attachées au rotor (12) de manière fixe à l'aide d'un agencement de connexion qui assure que la première partie d'extrémité (30) et la seconde partie d'extrémité (32) tournent avec la même vitesse.

3. Moteur électrique (1) selon l'une des revendications 1 et 2, **caractérisé en ce que** le capot (36) comprend un premier côté (72) et un deuxième côté (74) détourné du premier côté (72), la première partie d'extrémité (30) comprend une première extrémité située à l'extérieur du premier côté (72) du capot (36) et la seconde partie d'extrémité (30) comprend une seconde extrémité située à l'extérieur du deuxième côté (74) du capot (36), et la première partie d'extrémité (30) et la seconde partie d'extrémité (32) étant formées par un corps allongé solide commun (70) qui s'étend entre la première extrémité et la seconde extrémité.

4. Moteur électrique (1) selon la revendication 1, **caractérisé en ce que** la première partie d'extrémité (30) comprend un troisième élément primaire d'engrenage (60) adapté pour s'engager avec un troisième élément secondaire d'engrenage (130) à un troisième axe de réception (120) de l'agencement de commande (3) du dispositif de mobilier (5) et la seconde partie d'extrémité (32) comprend un quatrième élément primaire d'engrenage (62) adapté pour s'engager avec un quatrième élément secondaire d'engrenage (132) à un quatrième axe de réception (122) de l'agencement de commande (3) du dispositif de mobilier (5), lesquels troisième élément primaire d'engrenage (60) et quatrième élément primaire d'engrenage (62) sont adaptés pour transférer la rotation de la première partie d'extrémité (30) et de la seconde partie d'extrémité (32) respectivement sur le troisième axe de réception (120) et le quatrième axe de réception (122) de façon que la rotation du troisième axe de réception (120) et du quatrième axe de réception (122) devienne plus faible que la rotation de la première partie d'extrémité (30) et de la seconde partie d'extrémité (32).

5. Agencement de commande (3) pour un dispositif de mobilier (5), l'agencement de commande (3) comprenant un moteur électrique (1) selon l'une quelconque des revendications 1 à 4, un premier axe de réception (90), un deuxième axe de réception (92) et un agencement d'engrenage (94) comprenant un premier élément primaire d'engrenage (50) à la première partie d'extrémité (30) et un premier élément secondaire d'engrenage (100) au premier axe de réception (90), lesquels premier élément primaire d'engrenage (50) et premier élément secondaire d'engrenage (100) s'engagent l'un avec l'autre de façon qu'une rotation de la première partie d'extrémité (30) soit transférée au premier axe de réception (90) et en ce que l'agencement d'engrenage (94) comprend en outre un deuxième élément primaire d'engrenage (52) à la seconde partie d'extrémité (32) et un deuxième élément secondaire d'engrenage (102) au deuxième axe de réception (92), lesquels deuxième élément primaire d'engrenage (52) et deuxième élément secondaire d'engrenage (102) s'engagent l'un avec l'autre de façon qu'une rotation de la seconde partie d'extrémité (32) soit transférée au deuxième axe de réception (92),
**caractérisé en ce que**
les éléments primaires d'engrenage (50, 52) comprennent un filetage adapté pour s'engager avec un filetage respectif des éléments secondaires d'engrenage (100, 102) des axes de réception, l'agencement d'engrenage (94) étant configuré de façon que la rotation du premier axe de réception (90) et du deuxième axe de réception (92) devienne plus faible que la rotation respectivement de la première partie d'extrémité (30) et de la seconde partie d'extrémité (32).

6. Agencement de commande (3) selon la revendication 5, **caractérisé en ce que** l'agencement de commande (3) comprend en outre un troisième axe de réception (120) et un quatrième axe de réception (122), l'agencement d'engrenage (94) comprenant un troisième élément primaire d'engrenage (60) à la première partie d'extrémité (30), un troisième élément secondaire d'engrenage (130) au troisième axe de réception (120), un quatrième élément primaire d'engrenage (62) à la seconde partie d'extrémité (32) et un quatrième élément secondaire d'engrenage (132) au quatrième axe de réception (122), lesquels troisième élément primaire d'engrenage (60) et troisième élément secondaire d'engrenage (130) s'engagent l'un avec l'autre de façon que la rotation de la première partie d'extrémité (30) soit transférée au troisième axe de réception (120), et lesquels quatrième élément primaire d'engrenage (62) et quatrième élément secondaire d'engrenage (132) s'engagent l'un avec l'autre de façon que la rotation de la seconde partie d'extrémité (32) soit transférée au quatrième axe de réception (122), l'agencement d'engrenage (94) étant configuré de façon que la rotation du troisième axe de réception (120) et du quatrième axe de réception (122) devienne plus faible que la rotation respectivement de la première partie d'extrémité (30) et de la seconde partie d'extrémité (32).

7. Agencement de commande (3) selon l'une des revendications 5 à 6, **caractérisé en ce que** l'agencement de commande (3) comprend un axe de réception supplémentaire (140) pour chaque axe de réception et un agencement d'engrenage supplémentaire (142) entre l'axe de réception et les axes de réception supplémentaires (140), lequel agencement d'engrenage supplémentaire (142) est adapté pour transférer la rotation des axes de réception aux axes de réception supplémentaires (140), la première partie d'extrémité (30), la seconde partie d'extrémité (32) et les axes de réception étant orientés dans un plan commun (P1) et les axes de réception supplémentaires (140) étant orientés inclinés par rapport au plan commun (P1), de préférence perpendiculairement au plan commun (P1).

8. Agencement de commande (3) selon la revendication 7, **caractérisé en ce que** l'agencement d'engrenage supplémentaire (142) comprend un élément primaire d'engrenage supplémentaire à l'axe de réception et un élément secondaire d'engrenage supplémentaire à l'axe de réception supplémentaire (140), lesquels élément primaire d'engrenage supplémentaire et élément secondaire d'engrenage supplémentaire s'engagent l'un avec l'autre de façon que la rotation de l'axe de réception soit transférée aux axes de réception supplémentaires (140).

9. Agencement de commande (3) selon l'une quelconque des revendications 5 à 8, **caractérisé en ce que** l'agencement de commande comprend un élément respectif de déplacement (112) agencé aux axes de réception (90, 92, 120, 122) ou aux axes de réception supplémentaires (140), lesquels éléments de déplacement (112) étant adaptés pour être déplacés le long des axes de réception ou des axes de réception supplémentaires (140) lorsqu'ils agissent sur le dispositif de mobilier (5) de façon que le dispositif de mobilier (5) soit réorienté entre une première et une seconde orientations.

10. Agencement de commande (3) selon l'une quelconque des revendications 5 à 9, **caractérisé en ce que** les éléments primaires d'engrenage (50, 52) comprennent un filetage respectif ayant un même premier pas de vis et les éléments secondaires d'engrenage (100, 102) comprennent un filetage respectif ayant un même second pas de vis.

11. Dispositif de mobilier (5), **caractérisé en ce que** le dispositif comprend un agencement de commande (3) selon l'une des revendications 5 à 10.

12. Dispositif de mobilier (5) selon la revendication 11, **caractérisé en ce que** le dispositif comprend un élément de plaque (110) adapté pour être déplacé entre une première position et une seconde position, l'agencement de commande (3) étant configuré de façon que le ou les premiers axes de réception (90, 120) à la première partie d'extrémité (30) et le ou les deuxièmes axes de réception (92, 122) à la seconde partie d'extrémité (32) agissent sur différentes parties de l'élément de plaque (110) lorsqu'ils déplacent l'élément de plaque (110).

13. Dispositif de mobilier (5) selon l'une des revendications 11 et 12, **caractérisé en ce que** l'élément de plaque (110) comprend une première et une deuxième zones d'angle sur un premier côté de l'élément de plaque (110) et une troisième et une quatrième zones d'angle sur un second côté de l'élément de plaque (110), lesquels premier et second côtés étant des côtés opposés de l'élément de plaque (110), les axes de réception supplémentaires (140) à la première partie d'extrémité (30) agissant sur les première et seconde zones d'angle et les axes de réception supplémentaires (140) à la seconde partie d'extrémité (32) agissant sur les troisième et quatrième zones d'angle.

14. Dispositif de mobilier (5) selon l'une quelconque des revendications 11 à 13, **caractérisé en ce que** le dispositif (5) comprend une section d'extrémité (152) adaptée pour être pivotée entre une première et une seconde orientations, l'agencement de commande (3) étant adapté pour agir sur une première partie et une seconde partie de la section d'extrémité (152) lorsqu'il pivote la section d'extrémité (152).
